# EUROPÄISCHE PATENTSCHRIFT

(11) **EP 2 334 553 B1**
(45) Veröffentlichungstag und Bekanntmachung des Hinweises auf die Patenterteilung: **13.11.2013**
(21) Anmeldenummer: 09782436.1
(22) Anmeldetag: 01.09.2009
(51) Int. Cl.: B64D 23/00, A63G 31/00, G01M 9/02

(54) **FREIFALLSIMULATOR**
FREE FALL SIMULATOR
SIMULATEUR DE CHUTE LIBRE

(30) Priorität: 11.09.2008 DE 102008046759
(43) Veröffentlichungstag der Anmeldung: 22.06.2011
(73) Patentinhaber: Indoor Skydiving Bottrop GmbH, 46238 Bottrop (DE)
(72) Erfinder: NEBE, Boris, 46236 Bottrop (DE); DOHR, Manuel, 80336 München (DE)
(74) Vertreter: Zech, Stefan Markus
(86) Internationale Anmeldenummer: PCT/EP2009/061251
(87) Internationale Veröffentlichungsnummer: WO 2010/028980

(56) Entgegenhaltungen:
- EP-A1- 1 964 776
- EP-B1- 1 539 572
- WO-A1-00/59595
- WO-A2-2006/012647
- GB-A- 536 189
- JP-A- 63 204 129
- US-A- 2 914 941
- US-A1- 2004 115 593

## Beschreibung

Die Erfindung betrifft einen Freifallsimulator mit in sich geschlossenem Luftkreislauf sowie eine Belüftungsvorrichtung für einen Windkanal, insbesondere einen Freifallsimulator

Bei einem Freifallsimulator mit in sich geschlossenem Luftkreislauf handelt es sich um eine Einrichtung, die ausgelegt ist, um eine Person in einem - in der Regel steuerbaren - vertikal aufsteigenden Luftstrom, der durch eine Schwebekammer hindurch strömt, in einer Schwebeposition zu halten. Der Luftstrom wird über einen Luftführungskanal nach seinem Austritt aus einer oberen Öffnung der Schwebekammer zu einer unteren Öffnung der Schwebekammer zurückgeführt, so dass ein in sich geschlossener Kreislauf gebildet wird.

Ein typischer Effekt dieser sogenannten geschlossenen Freifallsimulatoren besteht darin, dass - aufgrund von Druckverlusten - die Luft innerhalb des Simulators erwärmt wird, was verschiedene Probleme mit sich bringt. Zum Einen kann die Überhitzung der Luft von den Simulator nutzenden Personen als unangenehm empfunden werden bzw. bei starker Überhitzung auch zu gesundheitlichen Schäden führen, zum anderen führt die Erwärmung der Luft zu einer Abnahme der Luftdichte, was wiederum die Kraft, welche die schwebende Person im Gleichgewicht hält, herabsetzt. Insgesamt ist - wegen der Kombination von oftmals nebeneinandergeordneten Gebläsen und bedarfsweise öffenbaren Belüftungen - ein erhöhter Steuerungsaufwand von Nöten

Um die eben beschriebenen Nachteile zu mindern, wurden bereits mehrere Lösungswege vorgeschlagen.

Die EP 19 64 776 A1 zeigt einen Freifallsimulator, in welchem in einem vertikalen Bereich Personen mittels eines erzeugten Luftstroms angehoben werden. Die zum Einsatz kommenden gekrümmten Rückführleitungen sind dabei aus Materialien konstruiert, welche eine hohe Wärmeleitfähigkeit aufweisen. Zusätzlich moderiert ein Kühlwasserkreislauf die Temperatur innerhalb des Freifallsimulators. Eine derartige Temperaturregelung ist mit einer eingeschränkten Materialauswahl verbunden und aufwändig.

Einen anderen Weg zum Vermindern der oben benannten allgemeinen Probleme geschlossener Freifallsimulatoren wird in der EP 1 539 572 B1 aufgezeigt. Dort wird ein Freifallsimulator für verschiedene Lern-, Ausbildungs- und Trainingszwecke von Fallschirmspringern oder zertifizierten Wettbewerbern beschrieben. Um die Überhitzung der Luft infolge des Betriebs der Ventilatoren zu verringern, ist in einen oberen Teil einer Kuppel ein Frischlufteinlass vorgesehen. Mehrere Saugventilatoren stellen die Luftansaugung sicher und erlauben ferner die Steuerung der Temperatur des Flugsimulators. Es handelt sich also hierbei um einen so genannten aktiven Luftaustausch, was bedeutet, dass zusätzliche Maschinen, nämlich die Saugventilatoren verwendet werden, um den Luftaustausch zu gewährleisten. Dies führt zu einem erhöhten Energieverbrauch, was zusammen mit den Herstellungskosten für die Saugventilatoren erhebliche zusätzliche finanzielle Aufwendungen erfordert.

Ein so genannter passiver Luftaustausch wird in der WO 2006/012647 A2 beschrieben. Der Freifallsimulator dieses Standes der Technik weist eine im wesentlichen rechteckförmige Gestalt auf, wobei in einem ersten vertikalen Abschnitt eine Schwebekammer vorgesehen ist, an die sich stromabwärts ein erster horizontaler Abschnitt anschließt, in welchem zwei Gebläse zur Erzeugung eines Luftstroms angeordnet sind. An den ersten horizontalen Abschnitt schließt sich ein zweiter vertikaler Abschnitt an, welcher der Rückführung des Luftstroms in Richtung einer Bodenfläche dient. In diesem zweiten vertikalen Abschnitt sind eine Einlasstür sowie eine Auslasstür derartig angebracht, dass sie den Strömungsquerschnitt verengen und eine Düse ausbilden. Dadurch wird ein Druckgradient zwischen einem Innenraum und dem Außenraum des Tunnels ausgebildet, so dass ein Luftaustausch stattfindet und dadurch die Temperatur moderiert wird. Ein Nachteil dieses Freifallsimulators besteht darin, dass aufgrund der Verengung des Strömungsquerschnitts durch die Ein- und Auslasstür die Strömungsgeschwindigkeit im Bereich dieser Türen zusätzlich erhöht wird, was zu einer erhöhten Luftreibung mit zusätzlicher Wärmeentwicklung führt. Außerdem sind Ein- und Auslasstür aufgrund ihrer Ausrichtung in den Luftstrom einer äußerst hohen Beanspruchung ausgesetzt.

Die GB 536 189 A offenbart einen Windtunnel zur Erprobung von Triebwerken und Propellern mit Umlenklamellen und einer Luftauslassführung, die unmittelbar hinter einem Propeller angeordnet ist. Aus der US 2 914 941 A ist ein offener Windtunnel mit Umlenklamellen und einem Auffangbecken für Wassertropfen offenbart. Derartige Windkanäle bzw. Windtunnel müssen grundsätzlich anderen Anforderungen entsprechen als Freifallsimulatoren und sind von daher zur Ermöglichung eines Schwebens von Personen ungeeignet. Ein gattunsgemäßer Freifallsimulator ist aus US 2004/0115593 A1 bekannt, andere sind aus WO 00/59595 und JP 63204129 bekannt.

Der Erfindung liegt die Aufgabe zugrunde, einen Freifallsimulator sowie eine Belüftungsvorrichtung für einen Windkanal, insbesondere einen Freifallsimulator aufzuzeigen, wobei die Temperatur im Inneren wirkungsvoll und mit geringem Kostenaufwand reduziert werden soll. Diese Aufgabe wird durch einen Freifallsimulator nach Patentanspruch 1 gelöst.

Die Aufgabe wird somit durch einen Freifallsimulator mit in sich geschlossenem Luftkreislauf gelöst, welcher eine Schwebekammer, in welcher Personen infolge eines vertikal aufwärts gerichteten Luftstromes schweben können, mit einer unteren Öffnung an einem unteren Ende und einer oberen Öffnung an einem oberen Ende, einem im Wesentlichen geschlossenen Luftführungskanal mit mindestens einem Gebläse, welcher die untere Öffnung und die Obere Öffnung der Schwebekammer verbindet, mindestens eine Lufteinlassöffnung und mindestens eine Luftauslassöffnung zum Austausch von Luft innerhalb des Luftführungskanals und einem Umlenkbereich mit Umlenkvorrichtungen, nämlich Umlenklamellen, welche einen Luftstrom innerhalb des Luftführungskanals in Eckbereichen oder Bereichen hoher Krümmung umlenken, umfasst, wobei mindestens eine Luftauslassöffnung innerhalb des Umlenkbereichs angeordnet ist, und mindestens eine Umlenklamelle zur Variation des aus der Luftauslassöffnung austretenden Luftstroms verschiebbar ist.

Ein wesentlicher Punkt der Erfindung liegt darin, dass eine Luftauslassöffnung genau dort vorgesehen ist, wo die für den Betrieb geschlossener Freifallsimulatoren notwendigen Luft-Umlenkvorrichtungen angeordnet sind. Dadurch werden auf elegante Weise die auf den Luftstrom wirkenden Fliehkräfte in den entsprechenden Bereichen ausgenutzt, so dass keine speziellen Luftauslenkvorrichtungen konstruiert werden müssen, um einen Teil des Luftstroms aus dem Inneren des Kanals hinauszulenken. Es wird eine wirkungsvolle und energieeffiziente Kühlung der Innenluft des Freifallsimulators erreicht.

Vorzugsweise ist der aus der Luftauslassöffnung austretende Luftstrom durch Veränderung einer Luftauslassöffnungsquerschnittsfläche variabel einstellbar. Dadurch kann auf äußere Einflüsse, wie Temperatur oder Luftdruck reagiert werden.

In einer bevorzugten Ausführungsform ist der Luftauslassöffnung eine verschwenk- und/oder verschiebbare Schließvorrichtung zur Variation des austretenden Luftstroms zugeordnet. Dadurch ist eine besonders einfache Variation des austretenden Luftstroms möglich.

Mindestens eine Umlenklamelle ist zur Variation des austretenden Luftstroms verschiebbar. Die Umlenklamellen erfüllen also eine Doppelfunktion, nämlich einerseits die Umlenkung und andererseits die Auslenkung von Teilen des Luftstroms, was ein zusätzliches Bauteil überflüssig macht, wodurch Kosten eingespart werden können.

Vorzugsweise ist mindestens eine Umlenklamelle, vorzugsweise die Gesamtheit der Umlenklamellen in radialer Richtung verschiebbar. Eine radiale Verschiebung ist konstruktiv einfach und ermöglicht es die verschobenen Umlenklamellen platzsparend unterzubringen.

Vorzugsweise ist die mindestens eine Umlenklamelle derart korrespondierend zu einer Öffnung des Luftführungskanals ausgebildet, dass die Öffnung infolge der radialen Verschiebung der mindestens einen Umlenklamelle öffen- oder verschließbar ist. Durch eine derartige Verschiebung einer Umlenklamelle wird eine weitere Möglichkeit geschaffen den Luftstrom zu verändern.

In einer besonders bevorzugten Weiterbildung ist eine Vielzahl von Umlenklamellen als Gesamtheit in radialer Richtung diskret, vorzugsweise um eine Länge, die dem radialen Abstand zweier benachbarter Umlenklamellen entspricht, derartig verschiebbar, dass die Öffnung sowohl vor als auch nach einem Verschiebevorgang durch eine Umlenklamelle verschlossen ist. Dadurch wird es auch ohne zusätzliche Bauteile oder Maßnahmen ermöglicht, dass das Herausschieben einer oder mehrerer Umlenklamellen nicht zu einem Druckverlust führt.

Vorzugsweise ist der Luftdruck innerhalb eines Bereichs, in welchen aus dem Luftführungskanal herausschiebbare Umlenklamellen einführbar sind, derartig regelbar, dass ein Druckverlust beispielsweise über verbleibende Öffnungen, wie Spalten, Risse od. dgl. weiter minimiert wird. Durch diese Ausführung wird auf konstruktiv einfache und effektive Art der Druckverlust infolge eines Verschiebens der Umlenklamellen minimiert.

Vorzugsweise umfasst die Luftauslassöffnung einen trichterförmigen Luftauslassdiffusor. Dies erleichtert die Ableitung des austretenden Anteils des Luftstroms.

In einer weiteren bevorzugten Ausführungsform ist mindestens eine Schließvorrichtung der Lufteinlassöffnung zur Variation des eintretenden Luftstroms verschwenk- und/oder verschiebbar, insbesondere nach außen verschwenkbar ausgebildet. So lässt sich ebenfalls auf einfache Weise die Menge an eintretender Luft steuern, was indirekt auch die Menge der austretenden Luft, also die Wärmeabfuhr nach außen aufgrund eines im stationären Zustand konstanten Gesamtvolumens des Luftstroms, erreicht.

Vorzugsweise sind die Lufteinlassöffnung und/oder die Luftauslassöffnung in einem oberen Luftführungskanalabschnitt angeordnet. Ist die Luftauslassöffnung in einem oberen Luftführungskanalabschnitt angeordnet, so wird die erwärmte Luft nach dem Austritt aus dem Luftführungskanal von diesem weggeleitet, da erwärmte Luft stets nach oben steigt.

Vorzugsweise ist die Lufteinlassöffnung von der Luftauslassöffnung räumlich so getrennt, dass die austretende Luft nicht von der Lufteinlassöffnung wieder angesaugt werden kann, was insbesondere durch eine Luftbarriere erreicht werden kann.

Vorzugsweise sind die Schließvorrichtungen der Lufteinlass- und/oder Luftauslassöffnungen elektronisch steuer- bzw. regelbar, wobei die Schließvorrichtungen insbesondere synchron aufeinander abstimmbar sind. Durch eine elektronische Steuerung bzw. Regelung kann der austretende und eintretende Luftstrom besonders genau gesteuert bzw. geregelt werden. Werden die Schließvorrichtungen dabei synchron aufeinander abgestimmt, so wird ein äußerst effizienter Luftaustausch erreicht.

Insbesondere für den Fall, dass die Schließvorrichtung in der Einlass- und/oder Auslassvorrichtung elektronisch steuerbar bzw. regelbar sind, sind vorzugsweise Messvorrichtungen vorgesehen, zum Messen verschiedener Parameter, wie insbesondere Temperatur, Strömungsgeschwindigkeit oder Luftfeuchte des Volumenstroms od. dgl., wobei vorzugsweise durch die Messvorrichtungen gewonnene Messwerte zur elektronischen Steuerung bzw. Regelung der Schließvorrichtung beitragen. Dies ermöglicht eine besonders feine Einstellung der Schließvorrichtungen, die insbesondere unabhängig von subjektiven Eindrücken des Bedienpersonals erfolgt und somit den jeweiligen Anforderungen besonders gut angepasst ist. Beispielsweise kann die Messung einer erhöhten Temperatur zu einer automatischen Vergrößerung des Auslassöffnungsquerschnittes und/oder des Lufteinlassöffnungsquerschnittes führen.

In einer bevorzugten Weiterbildung sind vier Gebläse vorgesehen, die innerhalb eines im Querschnitt vorzugsweise quadratischen Luftführungskanals in quadratischer Konstellation angeordnet sind. Die quadratische Konstellation bezieht sich dabei auf eine derartige Anordnung der vier Gebläse, dass deren Schwerpunkt auf einer Ebene liegt, die senkrecht auf der mittleren Strömungsrichtung des Luftstroms steht. Der Vorteil dieser Anordnung besteht darin, dass eine besonders homogene Verteilung des Luftstroms erreicht wird.

Vorzugsweise ist/sind das/die Gebläse in einem vertikalen Abschnitt des Luftführungskanals ausgebildet. Dies berücksichtigt besonders die eingeschränkte Verfügbarkeit von Grundfläche, wie sie beispielsweise in Vergnügungsparks vorliegt. Da die Gebläse einschließlich notwendiger Zu- und Ableitung eine relativ lange Erstreckung in Strömungsrichtung aufweisen, ist es daher sinnvoll, diese in vertikaler Anrichtung einzufügen, so dass die sowieso aufgrund der Schwebekammer notwendige Höhe des Freifallsimulators ausgenutzt wird und gleichzeitig der Bedarf an Grundfläche auf ein Minimum reduziert wird. Im Übrigen bleibt in diesem Fall Freiraum für die Anbringung von Luftauslass- und/oder Lufteinlassöffnungen in einem oberen, vorzugsweise horizontal verlaufenden Abschnitt des Luftführungskanals.

In einer bevorzugten Ausführungsform ist die Bodenfläche der Schwebekammer als Polygon, vorzugsweise als 10- bis 14-Eck, insbesondere als 12-Eck ausgebildet. Diese Form erlaubt einen Kompromiss zwischen einer möglichst "runden" Ausformung der Schwebekammer und einer relativ unaufwendigen Glas-/Stahlkonstruktion der Schwebekammer. Darüberhinaus lässt sich ein Sicherheitsnetz vergleichsweise gut verankern.

Vorzugsweise erweitert/erweitern sich die Schwebekammer und/oder der Querschnitt eines sich an die Schwebekammer anschließenden trichterförmigen Diffusors nach oben. Ist die Schwebekammer derart ausgestaltet, dass sie sich nach oben erweitert, so nimmt der Druck auf eine in der Schwebekammer schwebende Person nach oben hin ab, so dass ein inhärenter Sicherheitsmechanismus geschaffen ist, der eine schwebende Person davon abhält, über einen Grenzbereich hinaus an Höhe zu gewinnen. Das Vorsehen eines trichterförmigen sich nach oben erweiternden Diffusors erlaubt eine Reduktion der Strömungsgeschwindigkeit, was auch mit einer Reduktion der entstehenden Reibungswärme verbunden ist.

Alternativ zu einer sich nach oben erweiternden Schwebekammer kann diese auch einen von unten nach oben konstanten Querschnitt aufweisen. Dadurch werden konstante, von der Höhe unabhängige Bedingungen geschaffen, was am besten die Verhältnisse eines echten Freifalls simuliert.

Vorzugsweise geht/gehen der Querschnitt der Schwebekammer und/oder der Querschnitt eines sich an die Schwebekammer anschließenden trichterförmigen Diffusors von unten nach oben von einem Polygon höherer Ordnung in ein Polygon niedrigerer Ordnung, insbesondere von einem 12-Eck in ein 4-Eck über. Dadurch gelingt es auf einfache Weise trotz verschiedener Anforderungen an die Geometrie der Schwebekammer und die Querschnittsgeometrie des Luftführungskanals eine möglichst laminare Strömung aufrechtzuerhalten.

In einer bevorzugten Ausführung ist mindestens ein Sicherheitsnetz zur Absicherung von Menschen innerhalb oder zur Begrenzung der Schwebekammer vorgesehen, an dessen Netzaufhängungen Dämpfungselemente zur Stoßdämpfung vorgesehen sind. Die Stoßdämpfung verhindert, dass sich Menschen beim Herabfallen auf das Sicherheitsnetz verletzen.

Vorzugsweise ist mindestens eine Umlenklamelle über eine Kühlvorrichtung abkühlbar.

Dies ermöglicht eine wirkungsvolle Reduktion der Temperatur im Inneren des Freifallsimulators, welche mit einem relativ geringen Kostenaufwand verbunden ist. Insbesondere wird auch eine sehr leise Bauweise ermöglicht. Druckschleusen werden nicht benötigt. Insbesondere in warmen Regionen ist der Freifallsimulator nach dem zweiten Aspekt der Erfindung vorteilhaft, da ein Herunterkühlen der Innenluft unter die Außentemperatur möglich ist.

Vorzugsweise weist mindestens eine Umlenklamelle einen Hohlraum auf, in den ein Kühlmedium, welches durch die Kühlvorrichtung bereitgestellt wird, einführbar ist. Dadurch kann die mindestens eine Umlenklamelle auf konstruktiv einfache und effektive Weise gekühlt werden.

Bei einer bevorzugten Ausführungsform ist mindestens eine Umlenklamelle aus Aluminium, insbesondere aus einem Aluminiumstrangpressprofil gefertigt. Die mindestens eine Umlenklamelle kann dann einfach gefertigt werden und ist geeignet, effektiv im Inneren des Freifallsimulators erzeugte Wärme aufzunehmen und abzuführen. Alternativ können auch geschweißte Stahlbleche od. dgl. zum Einsatz kommen.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

### Hierbei zeigen:

- Fig. 1: eine schematische Darstellung eines erfindungsgemäßen Freifallsimulators;
- Fig. 2: eine Schnittansicht einer besonderen Ausführungsform des erfindungsgemäßen Freifallsimulators;
- Fig. 3: eine alternative Ausführungsform des Freifallsimulators in Schnittansicht;
- Fig. 4: eine schematische Ansicht einer alternativen Ausführungsform des Freifallsimulators;
- Fig. 5: eine schematische Ansicht einer weiteren alternativen Ausführungsform des Freifallsimulators;
- Fig. 6: eine schematische Ansicht einer weiteren alternativen Ausführungsform des Freifallsimulators;
- Fig. 7: eine schematische Ansicht einer weiteren alternativen Ausführungsform des Freifallsimulators; und
- Fig. 8: einen schematischen, horizontalen Schnitt durch eine alternative Ausführungsform der Schwebekammer mit Vorkammern.

In der nachfolgenden Beschreibung werden für gleiche und gleichwirkende Teile dieselben Bezugsziffern verwendet.

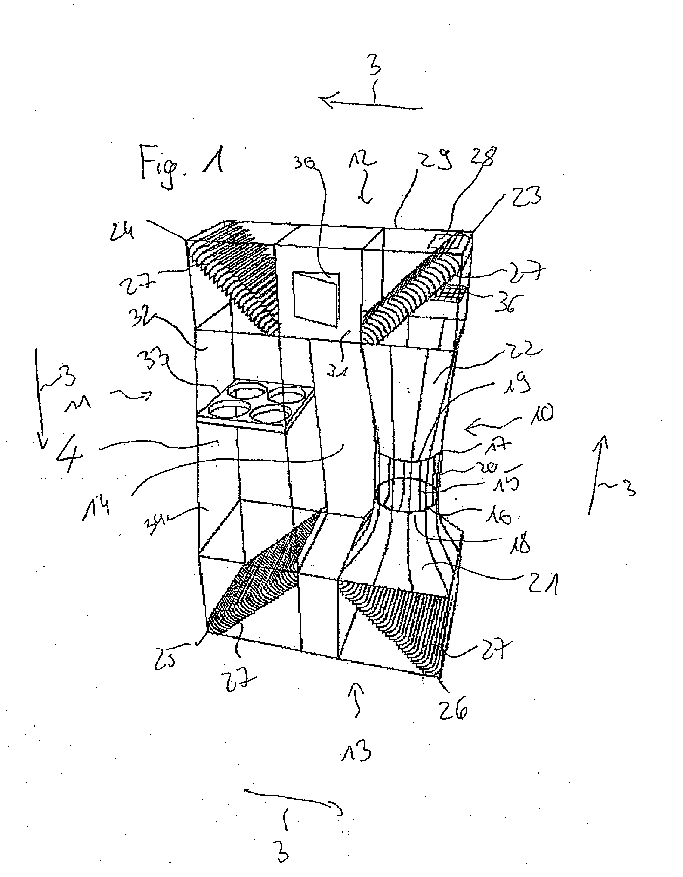

Fig. 1 zeigt einen Freifallsimulator mit in sich geschlossenem Luftkreislauf, der einen ersten und zweiten vertikalen Abschnitt 10, 11 sowie einen ersten und zweiten horizontalen Abschnitt 12, 13 umfasst. Die zwei vertikalen Abschnitte 10, 11 sowie die zwei horizontalen Abschnitte 12, 13 bilden einen quaderförmigen Grundriss mit einer ebenfalls quaderförmigen Aussparung 14 des Quaders aus. In einzelnen Bereichen weicht die tatsächliche geometrische Gestalt der Einheit aus den beiden vertikalen und horizontalen Abschnitten 10 bis 13 von der eben beschriebenen Grundform ab. Die zwei vertikalen Abschnitte 10, 11 und die zwei horizontalen Abschnitte 12, 13 bilden einen im Wesentlichen geschlossenen Luftführungskanal 4 aus.

Im ersten vertikalen Abschnitt 10 befindet sich eine Schwebekammer 15, die im Betrieb des Freifallsimulators derart von einem vertikal aufwärtsgerichteten Luftstrom durchströmt wird, dass Personen in der Schwebe gehalten werden können. Der Luftstrom strömt über eine untere Öffnung 16, welche sich an einem unteren Ende 18 der Schwebekammer befindet, in die Schwebekammer 15 ein und über eine obere Öffnung 17, welche sich an einem oberen Ende 19 der Schwebekammer 15 befindet, aus der Schwebekammer hinaus.

Die Schwebekammer 15 weist einen 12-eckigen vom unteren Ende 18 bis zum oberen Ende 19 konstanten horizontalen Querschnitt auf. Alternativ kann der Querschnitt auch (nicht in Fig. 1) von unten nach oben zunehmen, so dass die auf eine schwebende Person wirkende Kraft von unten nach oben abnimmt, was einem inhärenten Sicherheitsmechanismus entspricht. Ein freier Fall kann jedoch am besten mit konstantem Querschnitt der Schwebekammer 15 simuliert werden.

Die Schwebekammer 15 wird durch die untere Öffnung 16, die obere Öffnung 17 und eine Seitenwand 20 begrenzt. Im Bereich der unteren und oberen Öffnung 16, 17 können Sicherheitsnetze (welche nicht in Fig. 1 gezeigt sind) angebracht sein, die in der Schwebekammer 15 schwebende Personen an einer zu hohen oder zu niedrigen oder zu weit vom Zentrum entfernten Flugposition hindern können und außerdem die Person vor Verletzungen bei plötzlichen Positionsveränderungen, beispielsweise aufgrund einer veränderten Körperposition oder Veränderungen des Luftstroms, schützen. Ein Sicherheitsnetz 36 ist (im vorliegenden Fall horizontal) unterhalb der Luftauslassöffnung 28 angeordnet, wodurch verhindert wird, dass Gegenstände oder Personen aus der Luftauslassöffnung 28 durch den Luftstrom hinausbefördert werden.

Unterhalb der Schwebekammer 15 ist eine Düse 21 angeordnet, welche einen von unten nach oben abnehmenden horizontalen Querschnitt zur Beschleunigung des Luftstroms aufweist. Die entsprechende sich von unten nach oben verringernde Querschnittsfläche der Düse 21 geht von einem Rechteck sukzessive in ein unregelmäßiges 12-Eck und schließlich in einem Übergangsbereich zur Schwebekammer 15 in ein regelmäßiges 12-Eck über.

Am oberen Ende 17 der Schwebekammer 15 schließt sich ein Diffusor 22 an, um den aus der Schwebekammer 15 austretenden Luftstrom zu verlangsamen und dadurch Reibungsverluste und die Überhitzung des Luftstroms zu verringern. Der horizontale Querschnitt des Diffusors 22 geht von einem regelmäßigen 12-Eck in ein sich von unten nach oben vergrößerndes, unregelmäßiges 12-Eck und schließlich in ein Rechteck über.

An den Diffusor 22 schließt sich stromabwärts (die Strömungsrichtung ist durch die Pfeile 3 gekennzeichnet) ein erster Umlenkbereich 23 an, in welchem der aus dem Diffusor 22 austretende, im Wesentlichen vertikal gerichtete Luftstrom um etwa 90° umgelenkt wird. Analog wird der Luftstrom im zweiten Umlenkbereich 24, dritten Umlenkbereich 25 und schließlich vierten Umlenkbereich 26 jeweils um etwa 90° in seiner Richtung geändert, so dass der Luftstrom in die Schwebekammer 15 zurückgeführt wird. Umlenkvorrichtungen in Form von Umlenklamellen 27 sorgen für ein möglichst homogenes und reibungsarmes Umlenken des Luftstromes in den Umlenkbereichen 23 bis 26.

Im ersten Umlenkbereich 23 ist eine Luftauslassöffnung 28 vorgesehen, aus welcher ein Teil des Luftstroms austreten kann. Die Luftauslassöffnung 28 ist in einer oberen, horizontal verlaufenden Begrenzung 29 des ersten Umlenkbereichs 23 angeordnet. Weiter unten wird anhand der Figuren 9 bis 11 aufgezeigt, wie der austretende Teil des Luftstroms bevorzugt dosiert werden kann. Zwischen erstem Umlenkbereich 23 und zweitem Umlenkbereich 24, im ersten horizontalen Abschnitt 12 befindet sich eine Lufteinlassöffnung 30, durch die im Betrieb des Freifallsimulators Umgebungsluft zur Kühlung des Luftstroms eintreten kann. Die Lufteinlassöffnung 30 ist in einer Seitenwand 31 des ersten horizontalen Abschnittes 12 angeordnet. Über die Umlenkvorrichtung 27 des zweiten Umlenkbereiches 24 wird der Luftstrom um 90° umgelenkt, so dass er in einen zweiten Diffusor 32 des zweiten vertikalen Abschnittes 11 eintritt. Der zweite Diffusor 32 weist einen sich von oben nach unten vergrößernden etwa rechteckigen Querschnitt auf und verringert die Geschwindigkeit des auf die im zweiten vertikalen Abschnitt 11 eingebrachten Gebläse 33 auftreffenden Luftstroms.

Die vier Gebläse 33 sind innerhalb des - in einem entsprechenden Bereich, in dem die Gebläse vorgesehen sind, im Querschnitt quadratischen - Luftführungskanals 28 in quadratischer Konstellation angeordnet.

Vorzugsweise sind die Gebläse 33 mindestens teilweise aus Carbon gefertigt. Insbesondere ist es vorteilhaft, wenn rotierende Teile, wie Gebläseblätter (nicht in Fig. 1 gezeigt) aus Carbon gefertigt sind. Dadurch kann ein (im Vergleich zu beispielsweise Blättern aus Stahl) homogener Luftstrom erzeigt werden und die Schallbelastung reduziert werden. Da es sich bei Carbon um ein besonders leichtes Material (beispielsweise im Vergleich zu Stahl od. dgl.) handelt, weisen Gebläse 33 mit rotierenden Teilen aus Carbon ein relativ geringes Trägheitsmoment auf und sprechen deshalb besonders schnell auf eine Steuerung an. Besonders vorteilhaft ist es, wenn die Gebläse zumindest teilweise durch Aramid, insbesondere Aramid-Fasern beschichtet werden. Dies erhöht die Lebensdauer der Gebläse.

Durch die Gebläse 33 wird der Luftstrom beschleunigt und vertikal nach unten ausgestoßen. In einem dritten Diffusor 34, welcher ebenso wie der zweite Diffusor, einen von oben nach unten zunehmenden rechteckigen Querschnitt aufweist, wird die Geschwindigkeit des Luftstroms wieder zur Verringerung von Reibungsverlusten und einer Überhitzung des Luftstroms herabgesetzt. Durch die Umlenklamellen 27 des dritten und vierten Umlenkbereiches 25, 26 wird der Luftstrom wieder der Düse 21 und somit der Schwebekammer 15 zugeführt.

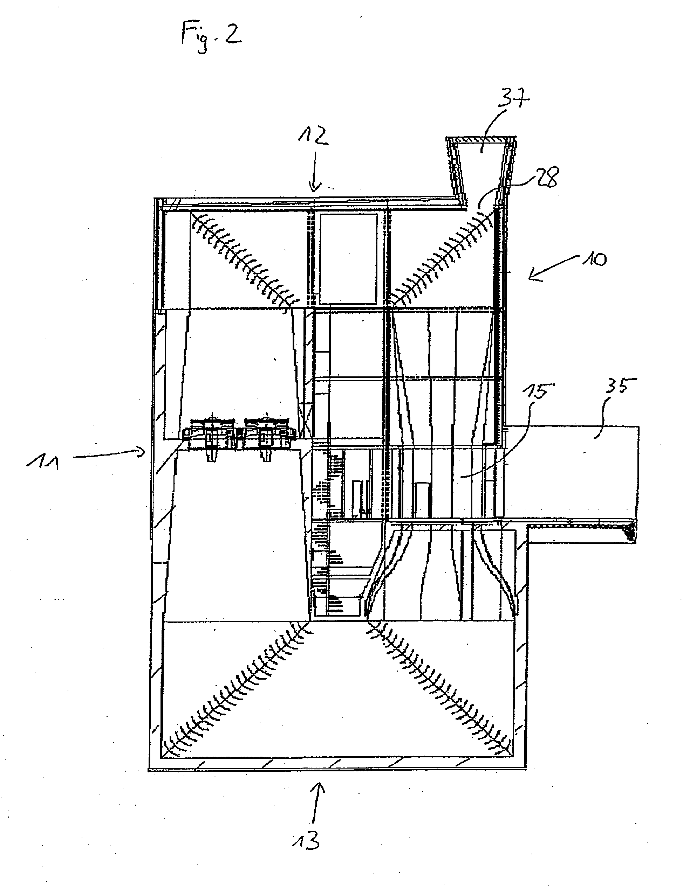

Fig. 2 zeigt eine bevorzugte Ausgestaltung des Freifallsimulators in einer Schnittansicht, wobei der Schnitt in eine vertikal verlaufende Ebene gelegt wurde. Der zweite horizontale Abschnitt 13 des Freifallsimulators ist vorzugsweise unterhalb einer Oberfläche eines Geländes angeordnet. Der erste und zweite vertikale Abschnitt 10, 11 sowie der erste horizontale Abschnitt 12 befinden sich vorzugsweise oberhalb der Oberfläche des Geländes. Durch eine derartige Bauweise wird die Höhe des Freifallsimulators bezogen auf die Oberfläche des Geländes reduziert.

Personen, die den Freifallsimulator nutzen wollen, können die Schwebekammer 15 über eine Eingangshalle 35 erreichen. Für den Fall, dass die Eingangshalle 35 gegenüber der Oberfläche des Geländes erhöht ist, kann ein Zwischenraum zwischen einem Boden der Eingangshalle 35 und der Oberfläche des Geländes frei bleiben oder ausgefüllt werden. Alternativ kann die Eingangshalle 35 sowie die Schwebekammer 15 auch auf der Höhe der Oberfläche des Geländes liegen, was die Benutzung des Freifallsimulators erleichtert.

An der Luftauslassöffnung 28 ist ein Luftauslassdiffusor 37 angeordnet. Der Luftauslassdiffusor 37 im vorliegenden Ausführungsbeispiel erweitert sich nach oben und sorgt dafür, dass der austretende Teil des Luftstroms nach dem vollständigen Austritt einen relativ großen Abstand gegenüber dem Freifallsimulator bzw. einer Außenhülle des Freifallsimulators aufweist. Der hier vorliegende Luftauslassdiffusor 37 weist einen trapezförmigen vertikalen Querschnitt auf.

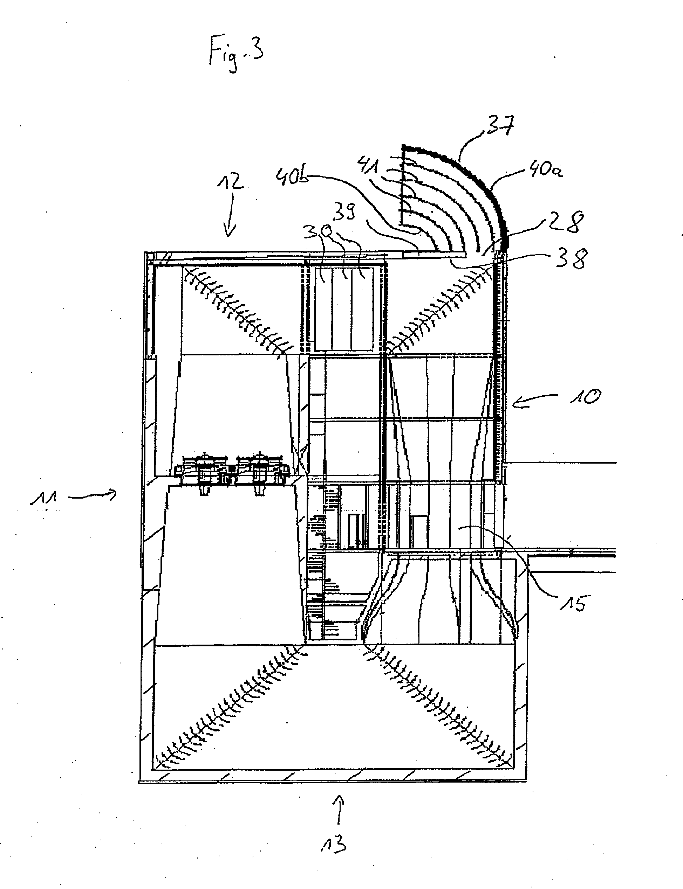

Fig. 3 zeigt eine weitere, bevorzugte Ausführungsform des Freifallsimulators. Die Luftauslassöffnung 28 ist hier durch eine Schließvorrichtung 38 mit einer Verschiebeklappe 39 variabel einstellbar. Der Luftauslassdiffusor 37 weist zwei parallele gebogene Abschnitte 40a, 40b an seiner Außenfläche auf. Innerhalb des Luftauslassdiffusors 37 sind gebogene Führungslamellen 41 eingebracht, um den aus der Luftauslassöffnung 28 austretenden Teil des Luftstroms möglichst laminar von der Außenhülle des Freifallsimulators wegzuleiten.

Anstelle nur einer Lufteinlassöffnung, wie beispielsweise in Fig. 1, sind in der Ausführungsform von Fig. 3 mehrere, konkret 6 (von denen in Fig. 3 nur drei zu sehen sind), Lufteinlassöffnungen 30 vorgesehen.

Die Lufteinlassöffnungen 30 sind vorzugsweise durch verschwenkbare Einlassklappen (nicht in Figuren gezeigt), welche Bestandteil von Einlassschließvorrichtungen sind, verschließbar. Die Einlassklappen sind beispielsweise nach Außen verschwenkbar und bilden mit der Außenhülle des Freifallsimulators einen spitzen Winkel,beispielsweise 45°, aus.

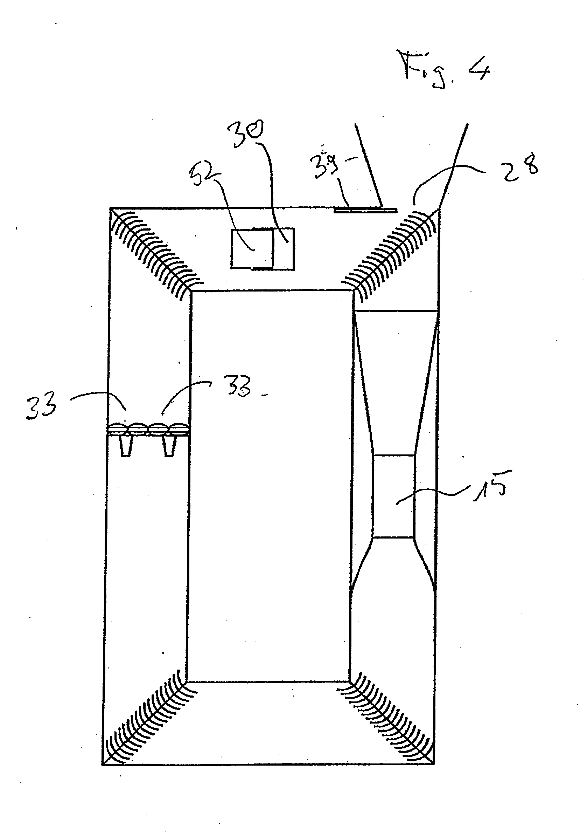

Die Figuren 4 bis 7 zeigen alternative Ausführungen des Freifallsimulators in schematischer Ansicht.

In Fig. 4 wird die Lufteinlassöffnung 30 durch eine Verschiebeklappe 52 teilweise verschlossen. Durch Verschieben der Verschiebeklappe 52 kann der austretende Teil des Luftstroms im stationären Zustand indirekt gesteuert werden. Die Luftauslassöffnung 28 kann durch die Verschiebeklappe 39 verschlossen werden, wobei diese Verschiebung entsprechend synchron auf die Verschiebung der Verschiebeklappe 52 der Lufteinlassöffnung 30 erfolgen kann. Dafür bietet sich eine elektronische Steuerung bzw. Regelung an, welche allerdings auch bereits bei einer nicht-synchronen Einstellung der Lufteinlassöffnung 30 bzw. Luftauslassöffnung 28 vorteilhaft ist.

Die synchrone oder voneinander unabhängige Steuerung bzw. Regelung der Lufteinlassöffnung 30 bzw. der Luftauslassöffnung 28 kann über einen Zentralrechner (nicht in den Figuren gezeigt) erfolgen. Insbesondere können Messeinrichtungen (welche ebenfalls nicht in den Figuren gezeigt sind) vorgesehen werden, die beispielsweise die Strömungsgeschwindigkeit, Temperatur und/oder Luftfeuchte des Luftstroms messen, um die Lufteinlassöffnung 30 und Luftauslassöffnung 28 optimal einstellen zu können.

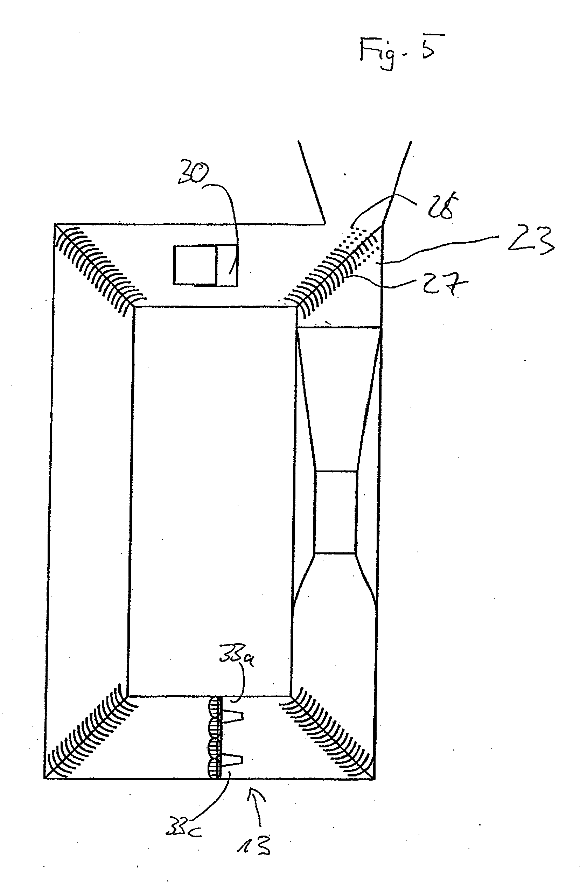

In Fig. 5 sind die Gebläse 33 (nur zwei der Gebläse 33 sind in Fig. 5 zu sehen) im zweiten horizontalen Abschnitt 13 untergebracht. Insbesondere wenn der zweite horizontale Abschnitt 13 unterhalb einer Oberfläche des Geländes 2 (nicht in Fig. 5 gezeigt) zu liegen kommt, wird dadurch die Schallbelastung wesentlich reduziert.

In Fig. 5 sind vier Lamellen 27 des ersten Umlenkbereiches 23 (gestrichelt gezeichnet) entfernt. Durch das Entfernen der Umlenklamellen 27 wird der Anteil des austretenden Luftstroms vergrößert. Entsprechend verringert das Hinzufügen von Umlenklamellen 27 den Anteil des austretenden Luftstroms. Gemäss der Erfindung werden die Lamellen jedoch auch nur teilweise, beispielsweise in Richtung senkrecht auf die Zeichenebene in Fig. 5 (in horizontaler Richtung) verschoben, was einer partiellen Entfernung der Umlenklamellen 27 bzw. einer Vergrößerung des Anteils des austretenden Luftstroms entspricht.

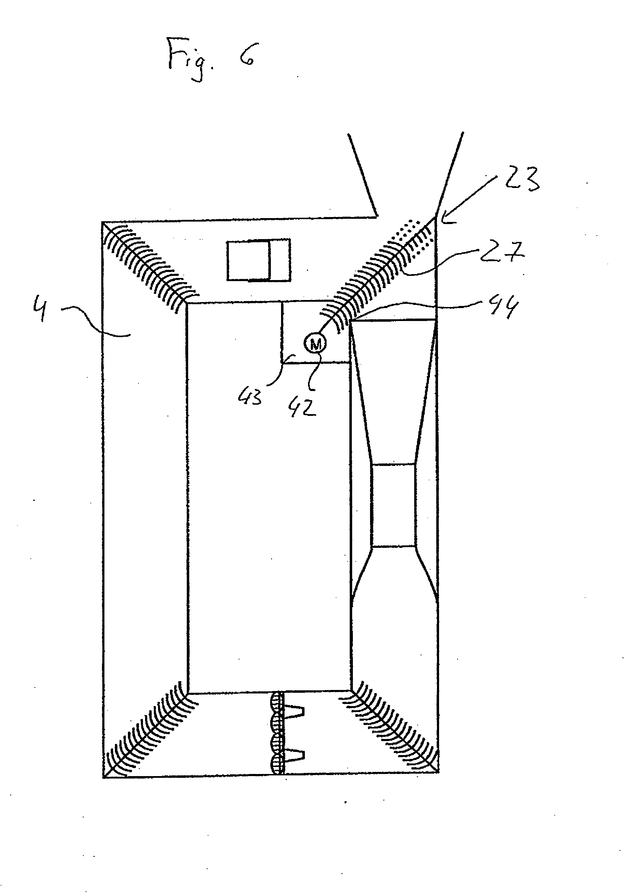

Alternativ zu der Ausführungsform aus Fig. 5 zeigt Fig. 6 eine besonders bevorzugte Ausführungsform des Freifallsimulators. Hier sind die Umlenklamellen 27 in ihrer Gesamtheit radial nach Innen verschiebbar. Im in Fig. 6 gezeigten Zustand sind die ersten drei Umlenklamellen (hier und im Folgenden immer radial von Innen nach Außen gezählt) innerhalb eines Druckraums 43 angeordnet. Die vierte Umlenklamelle 27 verschließt eine Öffnung 44 zwischen dem Druckraum 43 und dem ersten Umlenkbereich 23.

Der Druck innerhalb des Druckraums 43 ist vorzugsweise so einstellbar, dass zwischen dem Druckraum 43 und dem Luftführungskanal 4 eine minimale Druckdifferenz vorliegt. Dadurch wird ein Druckverlust innerhalb des Luftführungskanals minimiert.

Die Umlenklamellen sind in Fig. 6 um den 5-fachen Abstand zweier nebeneinanderliegender Umlenklamellen 27 bezogen auf einen Grundzustand (siehe Fig. 4) verschoben. Generell ist es vorteilhaft, wenn die Umlenklamellen 27 jeweils um ein Vielfaches (die Zahl 1 einschließend) des Abstandes zweier Umlenklamellen 27 verschiebbar sind. Dadurch kann erreicht werden, dass stets, d. h. in jedem beliebigen Zustand der Gesamtheit der Umlenklamellen 27, die Öffnung 44 verschlossen ist.

Die Gesamtheit der Umlenklamellen 27 wird durch einen Antrieb 42 in Form eines Elektromotors radial verschoben.

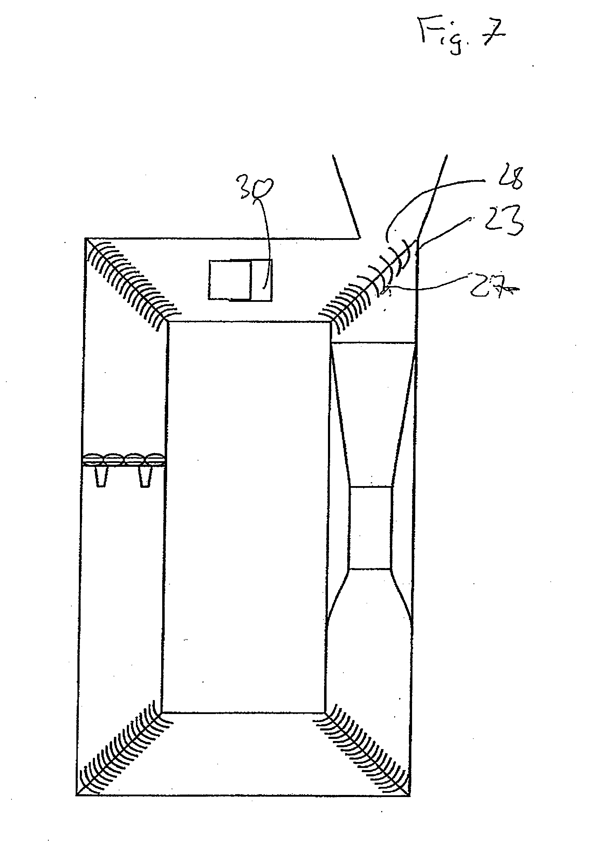

Wie in Fig. 7 zu sehen, kann der Anteil des austretenden Luftstroms auch durch ein Verschwenken einer oder auch mehrerer Umlenklamellen 27 erfolgen.

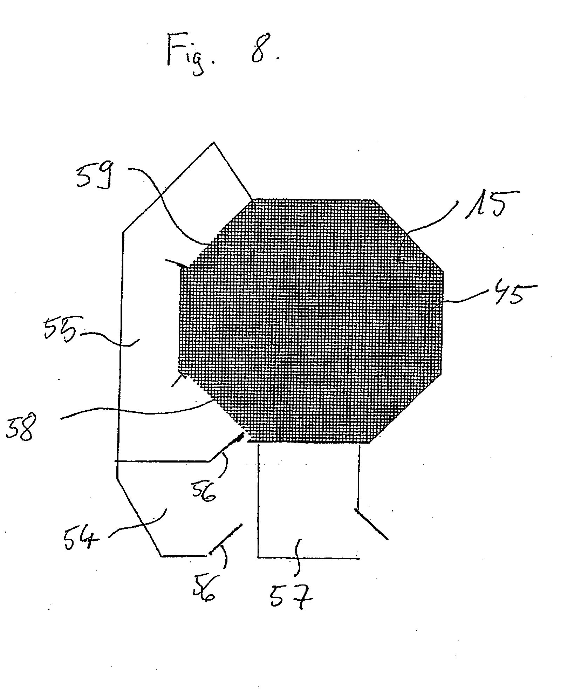

Fig. 8 zeigt einen schematischen, horizontalen Schnitt durch eine alternative Ausführungsform der Schwebekammer 15 mit Vorkammern. Der Grundriss der Schwebekammer 15 mit einem Sicherheitsnetz 45 ist achteckig. Die Schwebekammer 15 kann über einen Schwebekammer-Eingang 58 betreten werden. Über einen Schwebekammer-Ausgang 59 kann die Schwebekammer 15 wieder verlassen werden.

Der Schwebekammer-Eingang 58 sowie der Schwebekammer-Ausgang 59 trennen die Schwebekammer 15 von einem Eingangsbereich 55 ab. Der Eingangsbereich 55 ist von der Eingangshalle 35 (nicht in Fig. 8 gezeigt) durch eine Luftschleuse 54 getrennt. Die Luftschleuse 54 ist sowohl gegenüber dem Eingangsbereich 55 als auch gegenüber der Eingangshalle 35 durch Schließvorrichtungen 56 luftdicht abriegelbar. Seitlich an der Schwebekammer 15 befindet sich weiterhin ein Kontrollbereich 57. In diesem Kontrollbereich 57 kann die Schwebekammer 15 überwacht werden und zugleich die Steuerung des Freifallsimulators kontrolliert werden.

In einer konkreten Weiterbildung umfasst der Freifallsimilator alternativ oder zusätzlich eine Kühlvorrichtung, über die ein Kühlmedium abkühlbar ist, welches den Umlenklamellen zugeführt werden kann. In diesem Fall können die Umlenklamellen aus Aluminium bzw. Aluminiumstrangpressprofilen gefertigt sein. Die Umlenklamellen weisen einen Hohlraum auf, durch den das Kühlmedium strömen kann. Denkbar ist es, das Kühlmedium über Splitterplatten zuzuführen, wobei diese Splitterplatten ebenfalls mit einem Hohlraum versehen werden können. Bei dem Kühlmedium kann es sich insbesondere um Wasser handeln, es ist aber vorstellbar, andere Flüssigkeiten oder auch Gase oder auch Festkörper mit vorteilhaften wärmeleitenden Eigenschaften einzusetzen.

Die Ausführungsform mit einer Kühlvorrichtung und Umlenklamellen, welche einen Hohlraum aufweisen, eignet sich besonders gut, die Lärmbelästigung der Umgebung zu reduzieren und die Luft im Inneren des Freifallsimulators unter Umgebungstemperatur abzukühlen. Der letztgenannte Aspekt ist besonders in heißen Regionen vorteilhaft. Die mit einem Hohlraum versehenen Umlenklamellen übernehmen also mindestens zwei Funktionen, nämlich einerseits die Umlenkung des Luftstroms und andererseits die Abkühlung desselben. Dadurch kann ein zusätzliches Bauteil zur Wärme- bzw. Kälteübertragung eingespart werden, außerdem werden zusätzliche Druckverluste, die durch separate in den Luftstrom einzusetzende Kühlaggregate entstehen würden, vermieden.

An dieser Stelle sei darauf hingewiesen, dass alle oben beschriebenen Teile für sich alleine gesehen und in jeder Kombination, insbesondere den in den Zeichnungen dargestellten Details als erfindungswesentlich beansprucht werden. Abänderungen hiervon sind dem Fachmann geläufig.

### Bezugszeichenliste:

- 3: Pfeil
- 4: Luftführungskanal
- 10: Erster vertikaler Abschnitt
- 11: Zweiter vertikaler Abschnitt
- 12: Erster horizontaler Abschnitt
- 13: Zweiter horizontaler Abschnitt
- 14: Aussparung
- 15: Schwebekammer
- 16: Untere Öffnung
- 17: Obere Öffnung
- 18: Unteres Ende
- 19: Oberes Ende
- 20: Seitenwand
- 21: Düse
- 22: Diffusor
- 23: Erster Umlenkbereich
- 24: Zweiter Umlenkbereich
- 25: Dritter Umlenkbereich
- 26: Vierter Umlenkbereich
- 27: Umlenkvorrichtung (Umlenklamelle)
- 28: Luftauslassöffnung
- 29: Begrenzung
- 30: Lufteinlassöffnung
- 31: Seitenwand
- 32: Zweiter Diffusor
- 33: Gebläse
- 34: Dritter Diffusor
- 35: Eingangshalle
- 36: Sicherheitsnetz
- 37: Luftauslassdiffusor
- 38: Schließvorrichtung
- 39: Verschiebeklappe
- 40a, 40b: Abschnitt
- 41: Führungslamelle
- 42: Antrieb
- 43: Druckraum
- 44: Öffnung
- 45: Sicherheitsnetz
- 52: Verschiebeklappe
- 54: Luftschleuse
- 55: Eingangsbereich
- 56: Schließvorrichtungen
- 57: Kontrollbereich
- 58: Schwebekammer-Eingang
- 59: Schwebekammer-Ausgang

## Patentansprüche

1. Freifallsimulator mit in sich geschlossenem Luftkreislauf, umfassend
- eine Schwebekammer (15), in welcher Personen infolge eines vertikal aufwärts gerichteten Luftstromes schweben können, mit einer unteren Öffnung (16) an einem unteren Ende (18) und einer oberen Öffnung (17) an einem oberen Ende (19),
- einen im Wesentlichen geschlossenen Luftführungskanal (4) mit mindestens einem Gebläse (33), welcher die untere Öffnung (16) und die obere Öffnung (17) der Schwebekammer verbindet,
- mindestens eine Lufteinlassöffnung (30) und mindestens eine Luftauslassöffnung (28) zum Austausch von Luft innerhalb des Luftführungskanals (4),
- Umlenkbereiche (23, 24, 25, 26) mit Umlenkvorrichtungen (27), nämlich Umlenklamellen, welche einen Luftstrom innerhalb des Luftführungskanals (4) in Eckbereichen oder Bereichen hoher Krümmung umlenken, wobei mindestens eine Luftauslassöffnung (28) innerhalb eines Umlenkbereiches (23, 24, 25, 26) angeordnet ist,
**dadurch gekennzeichnet, dass** mindestens eine Umlenklamelle (27) zur Variation des aus der Luftauslassöffnung (28) austretenden Luftstroms verschiebbar ist.

2. Freifallsimulator mit in sich geschlossenem Luftkreislauf nach Anspruch 1 oder 2,
**dadurch gekennzeichnet, dass** ein aus der Luftauslassöffnung (28) austretender Luftstrom durch Veränderung einer Luftauslassöffnungsquerschnittsfläche variabel einstellbar ist.

3. Freifallsimulator mit in sich geschlossenem Luftkreislauf nach Anspruch 2,
**dadurch gekennzeichnet, dass** eine der Luftauslassöffnung (28) zugeordnete Schließvorrichtung (38) zur Variation des austretenden Luftstroms verschwenk- und/oder verschiebbar ist.

4. Freifallsimulator mit in sich geschlossenem Luftkreislauf nach einem der Ansprüche 2 oder 3, **dadurch gekennzeichnet, dass** mindestens eine Umlenklamelle (27), vorzugsweise die Gesamtheit der Umlenklamellen (27) in radialer Richtung verschiebbar ist.

5. Freifallsimulator mit in sich geschlossenem Luftkreislauf nach Anspruch 4,
**dadurch gekennzeichnet, dass** die mindestens eine Umlenklamelle (27) derart korrespondierend zu einer Öffnung (44) des Luftführungskanals ausgebildet ist, dass die Öffnung (44) infolge der radialen Verschiebung der mindestens einen Umlenklamelle (27) öffen- oder verschließbar ist.

6. Freifallsimulator mit in sich geschlossenem Luftkreislauf nach Anspruch 4 oder 5,
**dadurch gekennzeichnet, dass** eine Vielzahl von Umlenklamellen (27) als Gesamtheit in radialer Richtung diskret, vorzugsweise um eine Länge, die dem radialen Abstand zweier benachbarter Umlenklamellen (27) entspricht, verschiebbar ist derart, dass die Öffnung (44) sowohl vor als auch nach einem Verschiebevorgang durch eine Umlenklamelle (27) verschlossen ist.

7. Freifallsimulator mit in sich geschlossenem Luftkreislauf nach einem der vorhergehenden Ansprüche, **dadurch gekennzeichnet, dass** die Lufteinlassöffnung (30) und/oder die Luftauslassöffnung (28) in einem oberen Luftführungskanalabschnitt angeordnet ist/sind und/oder, dass die Lufteinlassöffnung (30) von der Luftauslassöffnung (28) räumlich derartig durch eine Barriere, insbesondere Metallbarriere abgetrennt ist, dass aus der Luftauslassöffnung (28) austretende Luft nicht wieder durch die Lufteinlassöffnung (30) angesaugt wird.

8. Freifallsimulator mit in sich geschlossenem Luftkreislauf nach einem der vorhergehenden Ansprüche, **dadurch gekennzeichnet, dass** die Schließvorrichtungen (38) der Lufteinlass- und/oder Luftauslassöffnung (28, 30) elektronisch steuer- bzw. regelbar sind, wobei die Schließvorrichtungen vorzugsweise synchron aufeinander abstimmbar sind.

9. Freifallsimulator mit in sich geschlossenem Luftkreislauf nach einem der vorhergehenden Ansprüche, **dadurch gekennzeichnet, dass**
Messvorrichtungen vorgesehen sind, zum Messen verschiedener Parameter, wie insbesondere Temperatur, Strömungsgeschwindigkeit, Luftfeuchte des Luftvolumenstroms etc., wobei vorzugsweise durch die Messvorrichtungen gewonnene Messwerte zur elektronischen Steuerung bzw. Regelung der Schließvorrichtung beitragen.

10. Freifallsimulator mit in sich geschlossenem Luftkreislauf nach einem der vorhergehenden Ansprüche, **dadurch gekennzeichnet, dass** vier Gebläse (33) vorgesehen sind, die innerhalb eines vorzugsweise im Querschnitt quadratrischen Luftführungskanals (4) in quadratischer Konstellation angeordnet sind.

11. Freifallsimulator mit in sich geschlossenem Luftkreislauf nach einem der vorhergehenden Ansprüche, **dadurch gekennzeichnet, dass** das/die Gebläse in einem vertikalen Abschnitt (10, 11) des Luftführungskanals (14) ausgebildet ist/sind.

12. Freifallsimulator mit in sich geschlossenem Luftkreislauf nach einem der vorhergehenden Ansprüche, **dadurch gekennzeichnet, dass** die Schwebekammer (15) einen von unten nach oben konstanten Querschnitt aufweist und/oder, dass der Querschnitt der Schwebekammer (15) und/oder der Querschnitt eines sich an die Schwebekammer anschließenden trichterförmigen Diffusors (22) von unten nach oben von einem Polygon höherer Ordnung in ein Polygon niedrigerer Ordnung, insbesondere von einem 12-Eck in ein 4-Eck übergeht/übergehen.

13. Freifallsimulator mit in sich geschlossenem Luftkreislauf nach einem der vorhergehenden Ansprüche, **dadurch gekennzeichnet, dass** mindestens ein Sicherheitsnetz (45) zur Absicherung von Menschen innerhalb oder zur Begrenzung der Schwebekammer (15) vorgesehen ist, an dessen Netzaufhängungen (49) Dämpfungselemente zur Stoßdämpfung vorgesehen sind.

14. Freifallsimulator mit in sich geschlossenem Luftkreislauf nach einem der vorhergehenden Ansprüche, **dadurch gekennzeichnet, dass** mindestens eine Umlenklamelle über eine Kühlvorrichtung abkühlbar ist, wobei vorzugsweise
mindestens eine Umlenklamelle einen Hohlraum aufweist, in den ein Kühlmedium, welches durch die Kühlvorrichtung bereitgestellt wird, einführbar ist.

15. Freifallsimulator mit in sich geschlossenem Luftkreislauf nach einem der vorhergehenden Ansprüche **dadurch gekennzeichnet, dass** mindestens eine Umlenklamelle aus Aluminium, insbesondere aus einem Aluminiumstrangpressprofil gefertigt ist.

16. Freifallsimulator mit in sich geschlossenem Luftkreislauf nach einem der Ansprüche 1 bis 15, **dadurch gekennzeichnet, dass**
mindestens eine Umlenklamelle über eine Kühlvorrichtung abkühlbar ist.

## Claims

1. A free fall simulator having a self-contained air circuit, comprising
- a hover chamber (15) in which persons can hover as a result of an air stream directed vertically upward, including a lower opening (16) at a lower end (18), and an upper opening (17) at an upper end (19),
- a substantially closed air guide channel (4) including at least one fan (33), the channel connecting the lower opening (16) and the upper opening (17) of the hover chamber,
- at least one air inlet opening (30) and at least one air outlet opening (28) for exchanging air within the air guide channel (4),
- redirecting zones (23, 24, 25, 26) having redirecting means (27), namely redirecting lamellae which redirect an air stream within the air guide channel (4) in corner areas or areas of high curvature, wherein at least one air outlet opening (28) is disposed within a redirecting zone (23, 24, 25, 26),
**characterized in that** at least one redirecting lamella (27) is displaceable for varying the air stream exiting the air outlet opening (28).

2. The free fall simulator having a self-contained air circuit according to claim 1, **characterized in that** an air stream exiting the air outlet opening (28) is variably adjustable by changing a cross-sectional area of the air outlet opening.

3. The free fall simulator having a self-contained air circuit according to claim 2, **characterized in that** a closing device (38) associated to the air outlet opening (28) is pivotable and/or displaceable for varying the exiting air stream.

4. The free fall simulator having a self-contained air circuit according to any one of claims 2 or 3, **characterized in that** at least one redirecting lamella (27), preferably the entirety of redirecting lamellae (27) is displaceable in the radial direction.

5. The free fall simulator having a self-contained air circuit according to claim 4, **characterized in that** the at least one redirecting lamella (27) is formed to correspond to an opening (44) of the air guide channel in such a manner that the opening (44) can be opened or closed as a result of radial displacement of the at least one redirecting lamella (27).

6. The free fall simulator having a self-contained air circuit according to claim 4 or 5, **characterized in that** a plurality of redirecting lamellae (27) is discretely displaceable as a whole in the radial direction preferably by a length corresponding to a distance of two adjacent redirecting lamellae (27) in such a manner that the opening (44) is closed by one redirecting lamella both before and after a displacing operation.

7. The free fall simulator having a self-contained air circuit according to any one of the preceding claims, **characterized in that** the air inlet opening (30) and/or the air outlet opening (28) is/are arranged in an upper air guide channel section, and/or the air inlet opening (30) is spatially separated from the air outlet opening (28) by a barrier, preferably a metal barrier, so that air that exiting the air outlet opening (28) is not re-aspired by the air inlet opening (30).

8. The free fall simulator having a self-contained air circuit according to any one of the preceding claims, **characterized in that** the closing means (38) of the air inlet opening and/or air outlet opening (28, 30) can be controlled or regulated electronically, wherein the closing means preferably can be synchronized to each other.

9. The free fall simulator having a self-contained air circuit according to any one of the preceding claims, **characterized in that** measuring devices are provided for measuring various parameters such as temperature, flow velocity, air humidity of the air flow volume, etc., wherein the measured values obtained by the measuring devices contribute to the electronic control or regulation of the closing means.

10. The free fall simulator having a self-contained air circuit according to any one of the preceding claims, **characterized in that** four fans (33) are provided which are arranged in a quadratic configuration within an air guide channel of a preferably quadratic cross-section.

11. The free fall simulator having a self-contained air circuit according to any one of the preceding claims, **characterized in that** the fan or fans is/are formed in a vertical section (10,11) of the air guide channel (14).

12. The free fall simulator having a self-contained air circuit according to any one of the preceding claims, **characterized in that** the hover chamber (15) has a constant cross-section from a bottom to a top thereof, and/or the cross-section of the hover chamber (15) and/or the cross-section of a funnel-shaped diffuser (22) which follows the hover chamber pass/passes from a bottom to a top from a polygon of a higher order to a polygon of a lower order, such as from a dodecagon to a tetragon.

13. The free fall simulator having a self-contained air circuit according to any one of the preceding claims, **characterized in that** at least one safety net (45) is provided for protecting persons within the hover chamber (15) or limiting the hover chamber, at the net suspensions (49) of which damping elements are provided for shock absorption.

14. The free fall simulator having a self-contained air circuit according to any one of the preceding claims, **characterized in that** at least one redirecting lamella can be cooled by a cooling device, wherein preferably
at least one redirecting lamella has a hollow space into which a cooling medium supplied by the cooling device can be introduced.

15. The free fall simulator having a self-contained air circuit according to any one of the preceding claims, **characterized in that** at least one redirecting lamella is made of aluminum, e.g. an extruded aluminum profile.

16. The free fall simulator having a self-contained air circuit according to any one of claims 1 to 15, **characterized in that** at least one redirecting lamella can be cooled by a cooling device.

## Revendications

1. Simulateur de chute libre à circuit d'air fermé sur lui-même, comprenant
- une chambre de suspension (15) dans laquelle des personnes peuvent flotter en raison d'un flux d'air orienté verticalement vers le haut, avec une ouverture inférieure (16) à une extrémité inférieure (18) et une ouverture supérieure (17) à une extrémité supérieure (19),
- un canal de guidage d'air (4) sensiblement fermé avec au moins une soufflante (33), qui relie l'ouverture inférieure (16) et l'ouverture supérieure (17) de la chambre de suspension,
- au moins une ouverture d'admission d'air (30) et au moins une ouverture d'échappement d'air (28) pour l'échange d'air au sein du canal de guidage d'air (4),
- des zones de déflection (23, 24, 25, 26) avec des dispositifs de déflection (27), notamment des lamelles de déflection, qui dévient un flux d'air au sein du canal de guidage d'air (4) dans des zones en coin ou des zones à forte courbure, au moins une ouverture d'échappement d'air (28) étant disposée au sein d'une zone de déflection (23, 24, 25, 26),
**caractérisé en ce qu'**au moins une lamelle de déflection (27) est translatable pour la variation du flux d'air sortant de l'ouverture d'échappement d'air (28).

2. Simulateur de chute libre à circuit d'air fermé sur lui-même selon la revendication 1, **caractérisé en ce qu'**un flux d'air sortant de l'ouverture d'échappement d'air (28) est réglable de manière variable par modification d'une surface de section transversale d'ouverture d'échappement d'air.

3. Simulateur de chute libre à circuit d'air fermé sur lui-même selon la revendication 2, **caractérisé en ce qu'**un dispositif de fermeture (38) affecté à l'ouverture d'échappement d'air (28) est apte à pivoter et/ou translater pour la variation du flux d'air sortant.

4. Simulateur de chute libre à circuit d'air fermé sur lui-même selon l'une des revendications 2 ou 3, **caractérisé en ce qu'**au moins une lamelle de déflection (27), de préférence la totalité des lamelles de déflection (27), est translatable en direction radiale.

5. Simulateur de chute libre à circuit d'air fermé sur lui-même selon la revendication 4, **caractérisé en ce que** l'au moins une lamelle de déflection (27) est constituée de manière correspondante à une ouverture (44) du canal de guidage d'air de telle sorte que l'ouverture (44) soit apte à s'ouvrir ou à se fermer suite à la translation radiale de l'au moins une lamelle de déflection (27).

6. Simulateur de chute libre à circuit d'air fermé sur lui-même selon la revendication 4 ou 5, **caractérisé en ce qu'**une pluralité de lamelles de déflection (27) est translatable en totalité en direction radiale de manière discrète, de préférence d'une longueur qui correspond à l'écartement radial de deux lamelles de déflection voisines (27), de telle sorte que l'ouverture (44) soit fermée par une lamelle de déflection (27) aussi bien avant qu'après une opération de translation.

7. Simulateur de chute libre à circuit d'air fermé sur lui-même selon l'une des revendications précédentes, **caractérisé en ce que** l'ouverture d'admission d'air (30) et/ou l'ouverture d'échappement d'air (28) est/sont disposée/s dans un tronçon supérieur de canal de guidage d'air et/ou **en ce que** l'ouverture d'admission d'air (30) est séparée spatialement de l'ouverture d'échappement d'air (28) par une barrière, en particulier une barrière métallique, de telle sorte que de l'air sortant de l'ouverture d'échappement d'air (28) ne soit pas de nouveau aspiré par l'ouverture d'admission d'air (30).

8. Simulateur de chute libre à circuit d'air fermé sur lui-même selon l'une des revendications précédentes, **caractérisé en ce que** les dispositifs de fermeture (38) de l'ouverture d'admission d'air et/ou d'échappement d'air (28, 30) sont aptes à être pilotés ou régulés électroniquement, les dispositifs de fermeture étant de préférence accordables de manière synchrone les uns par rapport aux autres.

9. Simulateur de chute libre à circuit d'air fermé sur lui-même selon l'une des revendications précédentes, **caractérisé en ce que**
des dispositifs de mesure sont prévus, pour la mesure de divers paramètres, comme en particulier la température, la vitesse d'écoulement, l'humidité de l'air du flux volumique d'air etc., des valeurs de mesure acquises par les dispositifs de mesure contribuant de préférence à la commande ou régulation électronique du dispositif de fermeture.

10. Simulateur de chute libre à circuit d'air fermé sur lui-même selon l'une des revendications précédentes, **caractérisé en ce que** quatre soufflantes (33) sont prévues, lesquelles sont disposées selon une configuration carrée au sein d'un canal de guidage d'air (4) de préférence carré en section transversale.

11. Simulateur de chute libre à circuit d'air fermé sur lui-même selon l'une des revendications précédentes, **caractérisé en ce que** la/les soufflante/s est/sont constituée/s dans un tronçon vertical (10, 11) du canal de guidage d'air (14).

12. Simulateur de chute libre à circuit d'air fermé sur lui-même selon l'une des revendications précédentes, **caractérisé en ce que** la chambre de suspension (15) présente une section transversale constante de bas en haut et/ou **en ce que** la section transversale de la chambre de suspension (15) et/ou la section transversale d'un diffuseur (22) en forme d'entonnoir faisant suite à la chambre de suspension passe/passent de bas en haut d'un polygone d'ordre supérieur à un polygone d'ordre inférieur, en particulier d'un polygone à 12 côtés à un polygone à 4 côtés.

13. Simulateur de chute libre à circuit d'air fermé sur lui-même selon l'une des revendications précédentes, **caractérisé en ce qu'**au moins un filet de sécurité (45), aux accrochages de filet (49) duquel des éléments d'amortissement sont prévus pour l'amortissement de choc, est prévu pour la sécurisation de personnes au sein de ou pour la limitation de la chambre de suspension (15).

14. Simulateur de chute libre à circuit d'air fermé sur lui-même selon l'une des revendications précédentes, **caractérisé en ce qu'**au moins une lamelle de déflection est apte à être refroidie via un dispositif de refroidissement, sachant que de préférence
au moins une lamelle de déflection présente une cavité dans laquelle un fluide de refroidissement, lequel est fourni par le dispositif de refroidissement, est apte à être introduit.

15. Simulateur de chute libre à circuit d'air fermé sur lui-même selon l'une des revendications précédentes, **caractérisé en ce qu'**au moins une lamelle de déflection est fabriquée en aluminium, en particulier à partir d'un profilé d'extrusion en aluminium.

16. Simulateur de chute libre à circuit d'air fermé sur lui-même selon l'une des revendications 1 à 15, **caractérisé en ce qu'**au moins une lamelle de déflection est apte à être refroidie via un dispositif de refroidissement.
